# EUROPEAN PATENT SPECIFICATION

(11) **EP 4 094 880 B1**
(45) Date of publication and mention of the grant of the patent: **10.07.2024**
(21) Application number: 22175207.4
(22) Date of filing: 24.05.2022
(51) Int. Cl.: B23K 37/053

(54) **APPARATUS AND METHOD FOR HOLDING A COMPONENT**
HALTEVORRICHTUNG UND VERFAHREN ZUM HALTEN VON BAUELEMENTEN
DISPOSITIF ET MÉTHODE DE MAINTIEN DE PIÈCES

(30) Priority: 25.05.2021 IT 202100013502
(43) Date of publication of application: 30.11.2022
(73) Proprietor: Jobs S.p.A., 29122 Piacenza (IT)
(72) Inventor: AGOSTI, Dante, 25030 Lograto (IT)
(74) Representative: Bianciardi, Ezio

(56) References cited:
- EP-A1- 2 561 948
- US-A- 5 444 206

## Description

This invention relates to an apparatus and a method for holding (inspecting) a component while one or more operations are being performed. More specifically, the apparatus and the method are suitable for large components including one or more devices that require electrical and/or hydraulic power.

Known in the trade are apparatuses that include two centring machines defining a centring apparatus. Each centring machine comprises a frame that is movable along a longitudinal direction towards or away from the frame of the other centring machine.

The machine comprises a spindle that rotates about an axis of rotation and is connected to the frame. The spindle is also configured to hold the component. The component can thus be rotated while an operator inspects it or while an external machine tool performs mechanical machine processes on it.

These machines, however, have two major disadvantages. First of all, since the spindle does not protrude from the frame, the component is substantially in contact with the frame. This prevents the operator from inspecting the inside of the component, in the case of large pipes, for example, since the pipe is in contact with the walls of the frame along the axis of extension, which means the space inside is not accessible.

Also, many components, in order to be adequately inspected, need to be powered by electrical and/or hydraulic power. In prior art machines, there is no easy way of powering the component, which thus requires an external apparatus for supplying power.

Moreover, prior art machines do not allow holding more than one component at the same time and, if necessary, coupling to each other two components being held.

Other solutions that comprise apparatuses for holding (inspecting) a component during execution of one or more operations are described in document EP2561948A1, which illustrates a solution where the machine includes a frame and a sleeve for holding a component being subjected to a machine process. The sleeve is rotatable. Also provided are machining units which translate along the axis of the sleeve to vary their position relative to the component. These systems, have some disadvantages such as, for example, the need to move the entire frame to adjust the distance between the two sleeves and the impossibility of inspecting the inside of the component because the component and the frame are too close to each other.

The aim of this disclosure is to overcome the above mentioned disadvantages of the prior art by providing an apparatus and a method for holding (inspecting) a component during execution of one or more operations.

This aim is fully achieved by the apparatus and method of this disclosure as characterized in the appended claims.

According to an aspect of it, this disclosure provides an apparatus for holding a component during execution of one or more operations.

The apparatus comprises (at least) one centring machine.

The centring machine comprises a frame. The frame is preferably movable along a longitudinal direction relative to a supporting surface of the centring machine, that is, relative to a base. Preferably, the supporting surface (that is, the base) comprises a slideway in which the frame runs. The slideway is part of the centring machine (that is, of the base) or is already present in the supporting surface to allow integration with the frame of the centring machine.

The centring machine comprises a sleeve. The sleeve is associated with the frame. The sleeve is elongate along the longitudinal axis between a first end and a second end. The second end faces the outside of the frame (of the centring machine) in a direction of holding. The second end is configured to come into contact with the component or with a tool for gripping a component.

In an embodiment, the sleeve is rotatable about an axis of rotation relative to the frame. The axis of rotation is preferably parallel with the longitudinal direction.

The centring machine comprises an actuating unit for actuating the components of the centring machine. The actuating unit may comprise a plurality of actuators independent of each other, or a single actuator and a plurality of transmitting means for transferring motion to the respective components of the centring machine. More specifically, the actuating unit is connected to the sleeve to place it in rotation about the axis of rotation. Preferably, the actuating unit comprises a first actuator, connected to the sleeve to rotate it. The actuating unit is connected to the frame to move it along the longitudinal direction.

In accordance with the invention, the sleeve translates along the longitudinal direction relative to the frame. This allows varying the distance between the second end of the sleeve and the frame.

The possibility of translating the sleeve relative to the frame allows spacing one end of the component, connected to the second end of the sleeve, from a face of the frame from which the sleeve protrudes. This spacing makes it possible to inspect the inside of the component. Thus, the fact that the sleeve is translatable means that the distance between the component being held and the frame can be changed.

In an embodiment, the sleeve comprises a central power circuit. The central power circuit is connected to the actuating unit to receive power therefrom. The central power circuit includes one or more central power connectors, positioned at the second end of the sleeve. Preferably, the one or more central power connectors are configured to connect to a corresponding connector of the component.

That way, it is possible not only to hold a component but also to provide the component, or a tool for gripping the component, with power (hydraulic or electrical).

In an embodiment, the central power circuit comprises an electrical line, connected to a corresponding central electrical connector of the one or more central power connectors to supply electrical power to the component. In an embodiment, in addition or alternatively to the electrical line, the central power circuit comprises a hydraulic line, connected to a corresponding central hydraulic connector of the one or more central power connectors to supply hydraulic power to the component.

In an embodiment, the first actuator is connected to the sleeve. The first actuator includes a transfer element, configured for transmitting a roto-translation to the sleeve in response to a rotation of the first actuator. In an embodiment, the roto-translation of the sleeve is selective. In other words, in an embodiment, the first actuator is configurable between a first configuration, in which it is configured to roto-translate the sleeve, and a second configuration, in which it is configured to rotate and translate the sleeve separately and independently.

In a preferred embodiment, the centring machine comprises a spindle. The spindle is preferably concentric with the sleeve. The spindle is rotatable relative to the frame about an axis which preferably coincides with the axis of rotation of the sleeve. The sleeve is configured to translate relative to the spindle along the longitudinal direction.

The spindle is configured to grip a further component or a tool used to hold the further component.

In an embodiment, the spindle comprises a gripping crown. The gripping crown includes one or more gripping ends, configured to grip the further component to be assembled on the component.

Thanks to the spindle, the apparatus is capable of gripping two different components, of rotating them relative to each other about the axis of rotation and of translating them relative to each other along the longitudinal direction.

In an embodiment, the gripping crown comprises a circumferential power circuit, connected to the actuating unit to receive power therefrom. The circumferential power circuit includes one or more circumferential power connectors, positioned at the one or more gripping ends. The one or more circumferential power connectors are configured to connect to a corresponding connector of the further component.

That way, the apparatus allows actuating also the further component or the tool used to hold the further component.

In an embodiment, the one or more circumferential power connectors comprise one or more circumferential electrical power connectors and one or more circumferential hydraulic power connectors.

In an embodiment, each gripping end comprises at least one circumferential power connector of the one or more circumferential power connectors. Preferably, each gripping end comprises at least one electrical power connector and one hydraulic power connector of the one or more circumferential power connectors.

Preferably, the apparatus comprises an additional centring machine, comprising a corresponding additional frame, a corresponding additional sleeve and a corresponding additional actuating unit. The additional sleeve is rotatable about the axis of rotation. The second end of the sleeve and the second end of the additional sleeve face each other.

The frame and the additional frame are movable towards and away from each other along the longitudinal direction.

According to an aspect of this disclosure, the apparatus according to one or more of the features described is used as an apparatus for inspecting a component and/or for assembling an axially symmetric component to a further axially symmetric component.

According to an aspect of it, this disclosure also provides a method for holding a component during execution of one or more operations.

The method comprises a step of moving a frame along a longitudinal direction using an actuating unit.

The method comprises a step of gripping the component using a sleeve, which is associated with the frame and which is elongate along the longitudinal axis between a first end and a second end, facing towards the component to execute the gripping.

The method comprises a step of rotating the sleeve about an axis of rotation, preferably parallel with the longitudinal direction, using the actuating unit.

The method comprises a step of moving the sleeve along the longitudinal direction relative to the frame.

In accordance with the invention, the method comprises a connecting step, in which one or more central power connectors, positioned at the second end of the sleeve, are connected to corresponding connectors of the component. The method also comprises a step of supplying power, in which a central power circuit, connected to the actuating unit and to the one or more central power connectors, sends electrical power and/or hydraulic power to the component or to a tool for holding the component.

Preferably, the steps of rotating the sleeve and of moving the sleeve are carried out simultaneously, defining a roto-translation of the sleeve relative to the frame.

In a preferred embodiment of it, the method comprises an additional gripping step, in which one or more gripping ends of a spindle concentric with the sleeve hold a further component or a further holding tool. In such a case, the method comprises an assembly step, in which the spindle rotates relative to the sleeve for assembling the further component to the component gripped on the sleeve.

This and other features will become more apparent from the following description of a preferred embodiment, illustrated purely by way of nonlimiting example in the accompanying drawings, in which:

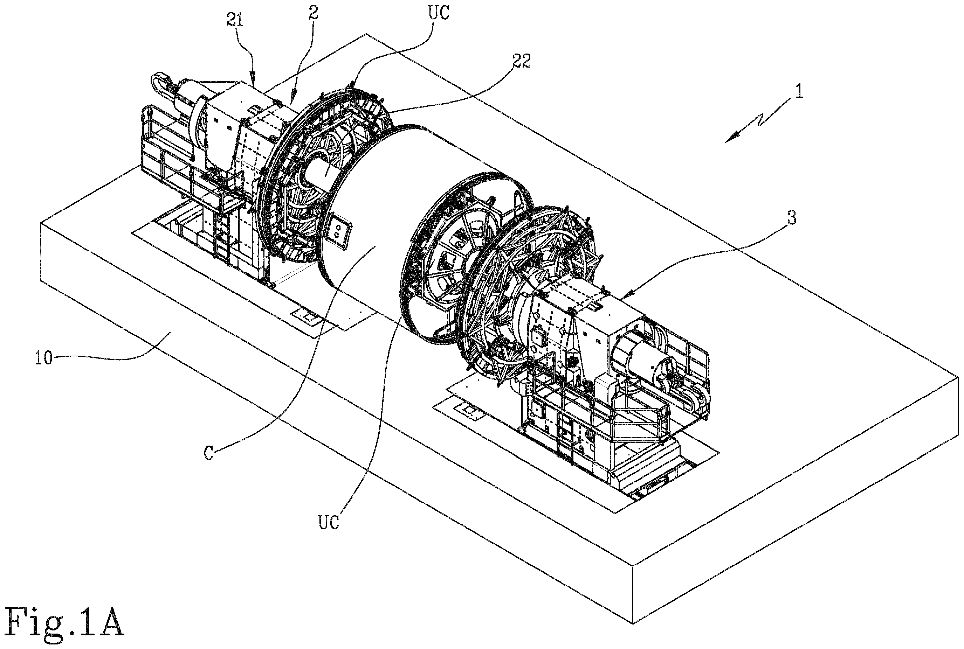

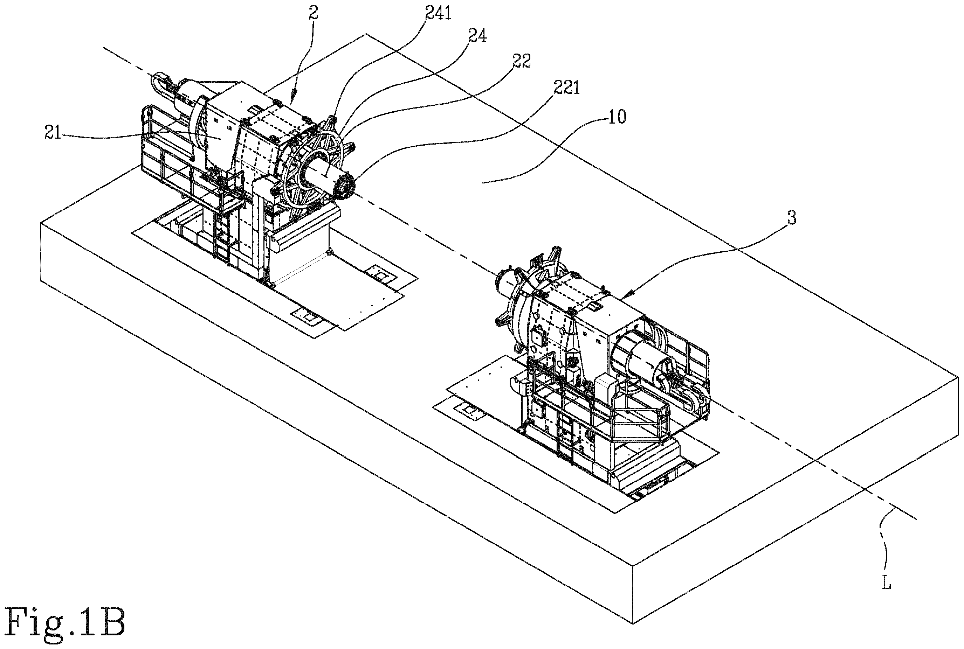

- Figures 1A and 1B illustrate an apparatus for holding a component during one or more operations, with a component mounted on it and without a component mounted on it, respectively;

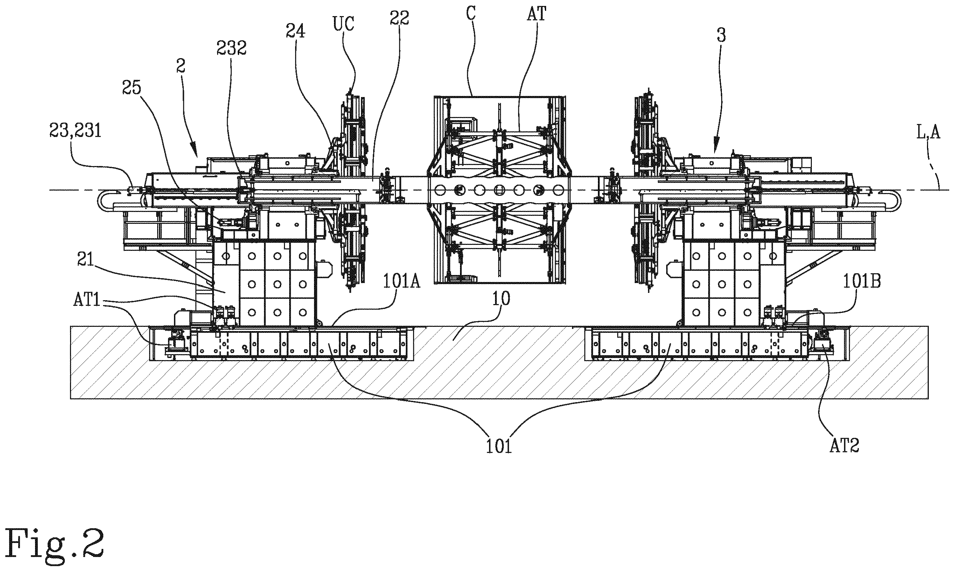

- Figure 2 is a lateral cross section of the apparatus of Figure 1A;

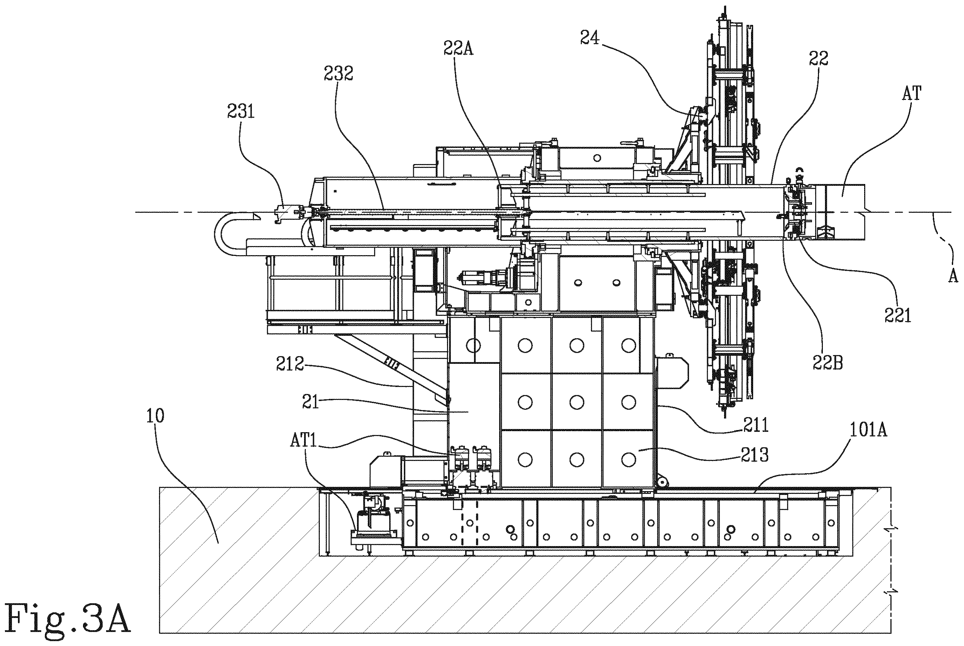

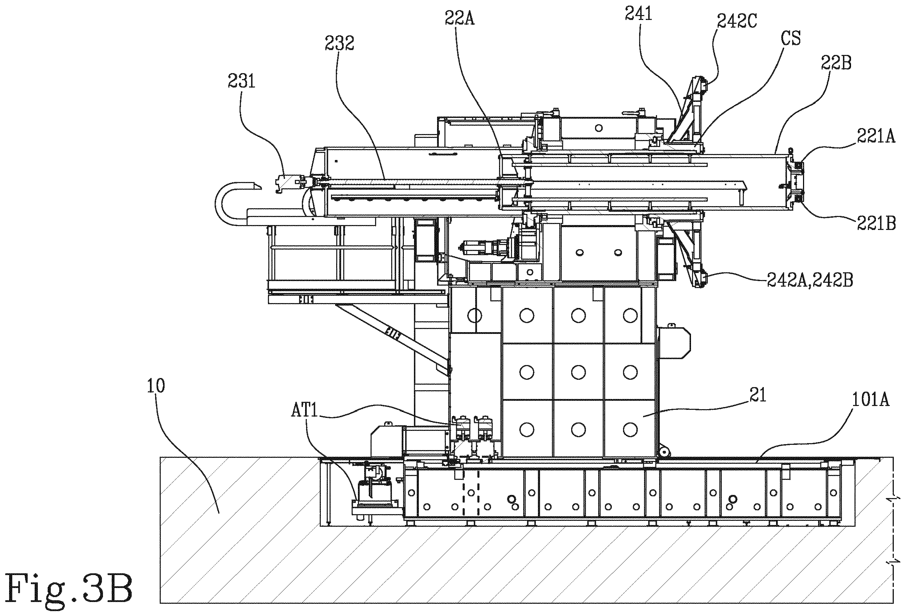

- Figures 3A and 3B illustrate a detail of a cross section of a centring machine of the apparatus of Figures 1A and 1B;

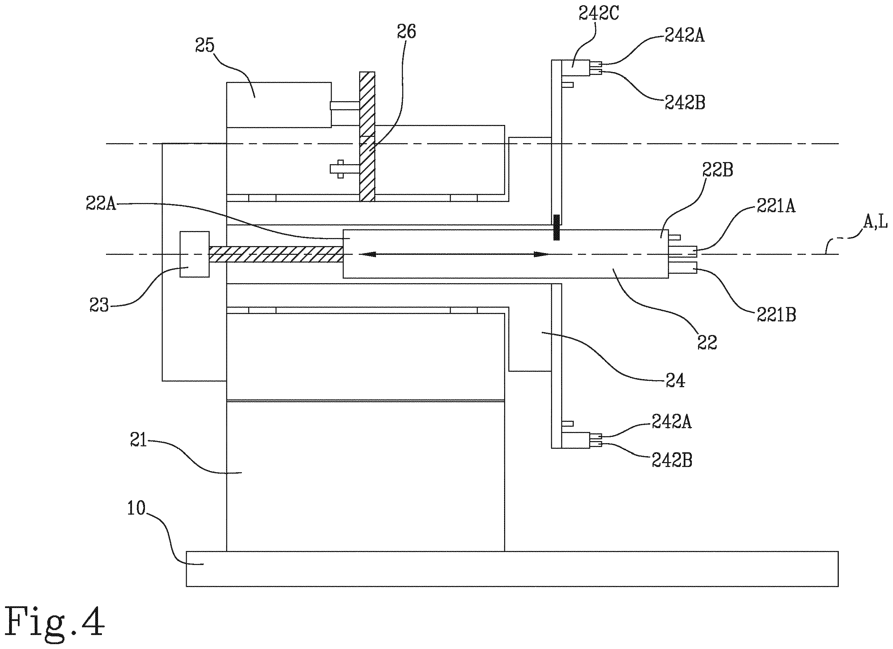

- Figure 4 schematically illustrates a cross section of a centring machine of the apparatus of Figure 3B;

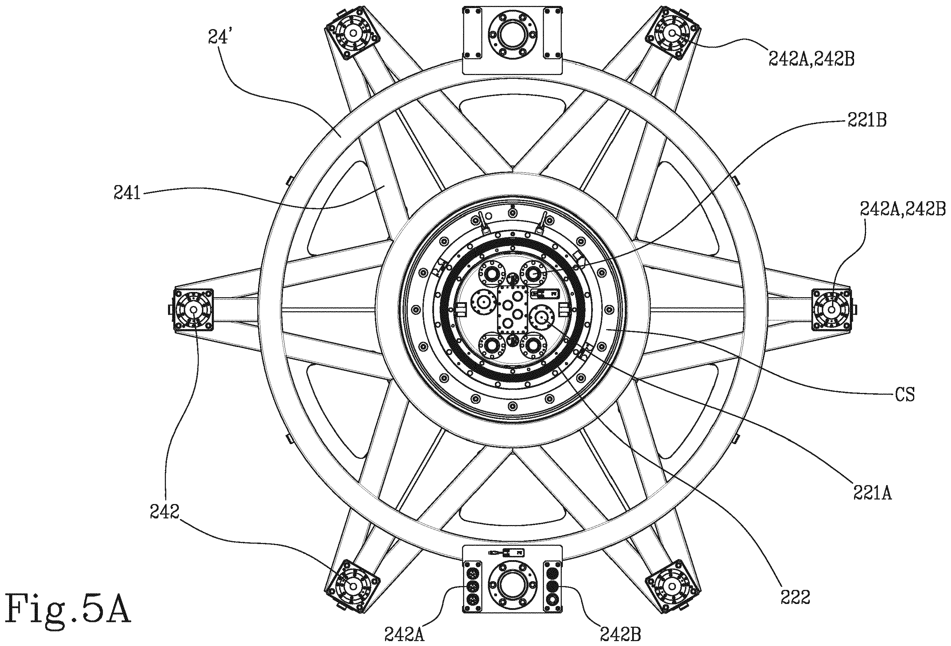

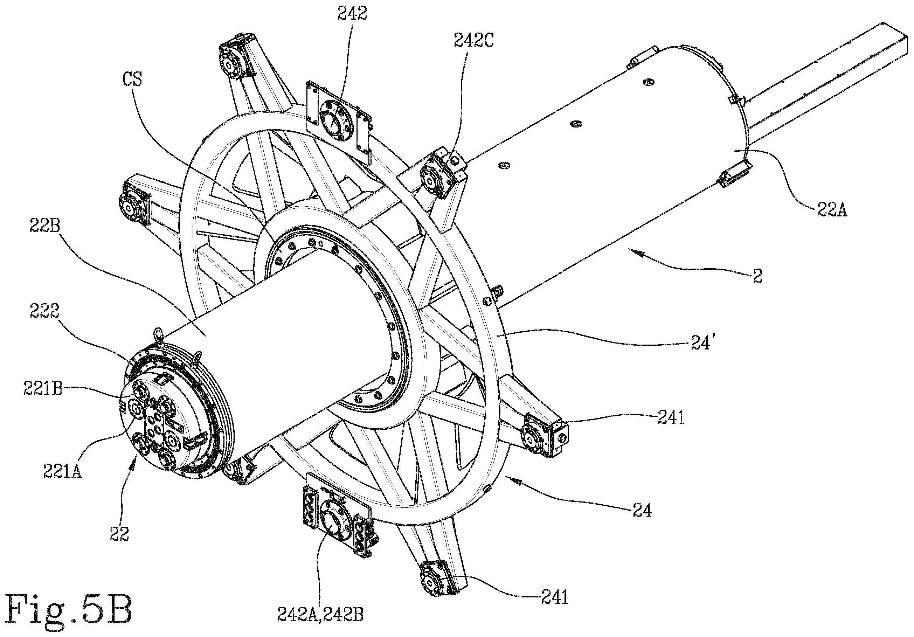

- Figures 5A and 5B show a front view and a perspective view of a spindle and a sleeve of the centring machine of Figure 3B.

With reference to the accompanying drawings, the numeral 1 denotes an apparatus for holding and/or inspecting a component C. The apparatus 1 is also an apparatus for assembling the component C to a further component UC.

In an embodiment, the apparatus 1 is configured for holding, inspecting and/or assembling axially symmetric components.

The apparatus 1 comprises a base 10. The base 10 is configured to constitute a stable weight of the apparatus 1, so as to install it on a supporting surface.

The base 10 comprises at least one slideway 101, running along a longitudinal direction L. More specifically, in a preferred embodiment, the base comprises a first slideway 101A and a second slideway 101B.

In an embodiment, the apparatus 1 comprises a first centring machine 2 and a second centring machine 3.

The first centring machine 2 is slidably connected to the first slideway 101A. In other words, the first centring machine 2 runs along the first slideway 101A in the longitudinal direction L. For example, the first centring machine 2 comprises wheels that are coupled to the first slideway 101A to roll therein.

The second centring machine 3 is slidably connected to the second slideway 101B. In other words, the second centring machine 3 runs along the second slideway 101B in the longitudinal direction L. For example, the second centring machine 3 comprises wheels that are coupled to the second slideway 101B to roll therein.

The first centring machine 2 and/or the second centring machine 3 comprise respective movement actuators AT1, AT2, each configured to move the first centring machine 2 and the second centring machine 3, respectively, along the longitudinal direction L relative to the base 10.

The first centring machine comprises a frame 21. The frame 21 is connected to the wheels or is connected directly to the first slideway 101A. The frame 21 comprises a front wall 211, a rear wall 212 and four side walls 213.

The frame 21 comprises an inspection structure, connected to the rear wall 212, the front wall 211 or to the side walls 213, to allow inspecting the part from a raised position relative to the base 10.

The first centring machine comprises a respective sleeve 22. The sleeve 22 extends along the longitudinal direction L, between a first end 22A and a second end 22B. The second end 22B is proximal to the front wall 211. The second end 22B protrudes from the front wall 211. The second end 22B is configured to come into contact with the part PZ to be held or with a tool AT for holding the part PZ.

The sleeve 22 is preferably cylindrical in shape. The sleeve 22 is rotatable about an axis of rotation A. The first end 22A is connected to a first actuator 23. The first actuator 23 comprises a rotary motor 231 and a lead screw 232 which converts the rotary motion into a roto-translation of the sleeve 22.

The sleeve 22 is thus movable in translation along the longitudinal direction L under the rotational action of the rotary motor 231.

The sleeve 22 comprises one or more connectors 221. The one or more connectors 221 are configured to receive hydraulic and/or electrical power from a power unit of the apparatus 1. More specifically, the one or more connectors 221 comprise hydraulic connectors 221A for receiving hydraulic power, and electrical connectors 221B for receiving electrical power. The presence of the hydraulic connectors 221A and of the electrical connectors 221B allows the tool AT or the part PZ to activate any actuators that may be present, that is, cylinder and piston assembly, gears or other services.

In an embodiment, the sleeve 22 comprises one or more sealing gaskets, preferably circular. The gasket is disposed on the second end 22B of the sleeve 22 so as to provide a sealed hold on the part or on a tool AT.

In an embodiment, the sleeve 22 comprises toothing 222, preferably circumferential. The toothing 222 is disposed on the second end 22B of the sleeve. The toothing 222 comprises a plurality of teeth extending in a longitudinal direction relative to a surface of the sleeve facing towards the tool AT or the component to be held.

The toothing 222 is configured to mesh with corresponding toothing on the tool AT or on the component so as to cause the tool AT or the component to rotate as one with the sleeve 22. In this embodiment, an axial locking element is provided for locking the tool AT or the component to the sleeve 22 along the longitudinal direction to prevent the sleeve from sliding off. For example, but not necessarily, the locking elements are pins (dowels) which interfere with the sleeve and with the tool AT and which extend along a direction radial to the axis of rotation A.

Lastly, in a further embodiment, the sleeve 22 and the tool AT or the component can be connected to each other by threading, where the male thread is made on the sleeve 22 and the female thread is made on the component or on the tool AT, or vice versa.

In an embodiment, the first centring machine 2 comprises a spindle 24. The spindle 24 is configured to rotate about a respective axis of rotation, which is preferably the axis of rotation A.

The spindle 24 comprises a gripping crown 24' which extends radially with one or more gripping arms 241. The one or more gripping arms 241 comprise their own connectors 242 at the respective ends of them. The connectors 242, as in the case of the sleeve 22, may be electrical connectors 242A and/or hydraulic connectors 242B.

At the end of each gripping arm 241, the spindle 24 comprises a respective fastener 242C for fastening to a tool AT or to a further part, positioned outside the part connected to the sleeve 22.

The first centring machine 2 comprises a second actuator 25, connected to the spindle 24 to drive it in rotation. The first centring machine also comprises a transmission unit 26 for transmitting motion from the second actuator 25 to the spindle 24.

In an embodiment, the sleeve 22 rotates relative to the frame 21 and relative to the spindle 24. In other words, the spindle 24 and the sleeve 22 rotate independently. More specifically, between the sleeve 22 and the spindle 24 there is a rolling bearing CS which allows reciprocal rotation. This allows mounting the part on the sleeve 22 to the further part mounted on the spindle 24 by rotating them independently.

The second centring machine 3 comprises the same components as those described with reference to the first centring machine 2.

## Claims

1. An apparatus (1) for holding a component during the execution of one or more operations, comprising a centring machine (2) including:
- a frame (21), movable along a longitudinal direction (L);
- a sleeve (22), associated with the frame (21) and elongate along the longitudinal direction (L) between a first end (22A) and a second end (22B), the second end (22B) facing the outside of the frame (21) in a direction of holding and being configured to come into contact with the component (PZ),
the sleeve (22) being rotatable relative to the frame (21) about an axis of rotation (A);
- an actuating unit (23, 25), connected to the sleeve (22) to place it in rotation about the axis of rotation (A) and to the frame (21) to move it along the longitudinal direction (L),
wherein the sleeve (22) translates along the longitudinal direction (L) relative to the frame (21) in order to vary a distance of the second end (22B) of the sleeve (22) from the frame (21), **characterized in that** the sleeve (22) comprises a central power circuit, connected to the actuating unit (23, 25) and including one or more central power connectors (221), positioned at the second end (22B) of the sleeve (2), said one or more central power connectors (221) being configured to connect to a corresponding connector of the component (PZ).

2. The apparatus (1) according to claim 1, wherein the central power circuit comprises an electrical line, connected to a corresponding central electrical connector (221B) of said one or more central power connectors, to supply electrical power to the component, and a hydraulic line, connected to a corresponding central hydraulic connector (221A) of said one or more central power connectors, to supply hydraulic power to the component.

3. The apparatus (1) according to any one of the preceding claims, wherein the actuating unit (23, 25) comprises a first actuator (23), connected to the sleeve (22), said first actuator (23) including a transfer element (232), configured for transmitting to the sleeve (22) a roto-translation, in response to a rotation of the first actuator (23).

4. The apparatus (1) according to any one of the preceding claims, wherein the centring machine (2) comprises a spindle (24), concentric with the sleeve (22) and rotating about the axis of rotation (A) relative to the frame (21), wherein the sleeve (22) is configured to translate relative to the spindle (24) along the longitudinal direction (L).

5. The apparatus (1) according to claim 4, wherein the spindle (24) comprises a gripping crown (24'), including one or more gripping ends (241C), configured to grip a further component, to be assembled on the component (PZ).

6. The apparatus (1) according to claim 5, wherein the gripping crown (24') comprises a circumferential power circuit, connected to the actuating unit (23, 25) and including one or more circumferential power connectors (242A, 242B), positioned at said one or more gripping ends (241C), said one or more circumferential power connectors (242A, 242B) being configured to connect with a corresponding connector of the further component.

7. The apparatus (1) according to claim 6, wherein said one or more circumferential power connectors comprise one or more circumferential electrical power connectors (242A) and one or more circumferential hydraulic power connectors (242B).

8. The apparatus (1) according to claim 6 or 7, wherein each gripping end (241) comprises at least one circumferential power connector (242A, 242B) of said one or more circumferential power connectors.

9. The apparatus (1) according to any one of the preceding claims, comprising an additional centring machine (3), comprising a corresponding additional frame, a corresponding additional sleeve and a corresponding additional actuating unit, wherein the additional sleeve rotates about the axis of rotation and wherein the second end of the sleeve and the second end of the additional sleeve face each other, and wherein the frame and the additional frame are movable towards and away from each other along the longitudinal direction.

10. Use of the apparatus (1) according to any one of the preceding claims as an apparatus for inspecting a component and/or for assembling an axially symmetric component to a further axially symmetric component.

11. A method for holding a component during the execution of one or more operations, the method comprising the following steps:
- moving a frame (21) along a longitudinal direction (L) using an actuating unit (23, 25);
- gripping the component (PZ) using a sleeve (22), which is associated with the frame (21) and elongate along the longitudinal axis (L) between a first end (22A) and a second end (22B), facing towards the component to execute the gripping;
- rotating the sleeve (22) about an axis of rotation (A) using the actuating unit (23, 25),
wherein the method comprises a step of moving the sleeve (22) along the longitudinal direction (L) relative to the frame (21), the method being **characterized by** a connecting step, wherein one or more central power connectors (221), positioned at the second end of the sleeve (22B), are connected to corresponding connectors of the component and a step of supplying power, wherein a central power circuit, connected to the actuating unit and to said one or more central power connectors (221), sends electrical power and/or hydraulic power to the component (PZ).

12. The method according to claim 11, wherein the steps of rotating the sleeve (22) and of moving the sleeve (22) are carried out simultaneously, defining a roto-translation of the sleeve (22) relative to the frame (21).

13. The method according to claim 11 or 12, comprising an additional gripping step, wherein one or more gripping ends (241) of a spindle (24) concentric with the sleeve (22) hold a further component and comprising an assembly step, wherein the spindle (24) rotates relative to the sleeve (22) for assembling the further component to the component gripped on the sleeve (22).

## Patentansprüche

1. Vorrichtung (1) zum Halten eines Bauteils während der Durchführung von einem oder mehreren Vorgängen, umfassend eine Zentriermaschine (2), einschließend:
- einen Rahmen (21), der entlang einer Längsrichtung (L) bewegbar ist;
- eine Hülse (22), die mit dem Rahmen (21) assoziiert und entlang der Längsrichtung (L) zwischen einem ersten Ende (22A) und einem zweiten Ende (22B) langgestreckt ist, wobei das zweite Ende (22B) der Außenseite des Rahmens (21) in einer Halterichtung zugewandt und ausgelegt ist, um mit dem Bauteil (PZ) in Kontakt zu kommen,
wobei die Hülse (22) relativ zum Rahmen (21) um eine Rotationsachse (A) drehbar ist;
- eine Betätigungseinheit (23, 25), die mit der Hülse (22) verbunden ist, um diese um die Rotationsachse (A) in Drehung zu versetzen, sowie mit dem Rahmen (21), um diesen entlang der Längsrichtung (L) zu bewegen,
wobei sich die Hülse (22) entlang der Längsrichtung (L) relativ zum Rahmen (21) verschiebt, um einen Abstand des zweiten Endes (22B) der Hülse (22) vom Rahmen (21) zu variieren,
**dadurch gekennzeichnet, dass** die Hülse (22) einen zentralen Leistungskreis umfasst, der mit der Betätigungseinheit (23, 25) verbunden ist, und einschließend einen oder mehrere zentrale Leistungsverbinder (221), die am zweiten Ende (22B) der Hülse (2) positioniert sind, wobei der eine oder die mehreren Leistungsverbinder (221) ausgelegt sind, um sich mit einem entsprechenden Verbinder des Bauteils (PZ) zu verbinden.

2. Vorrichtung (1) nach Anspruch 1, wobei der zentrale Leistungskreis eine elektrische Leitung umfasst, die mit einem entsprechenden zentralen elektrischen Verbinder (221B) des einen oder der mehreren zentralen Leistungsverbinder verbunden ist, um dem Bauteil elektrische Leistung zuzuführen, und eine Hydraulikleitung, die mit einem entsprechenden zentralen hydraulischen Verbinder (221A) des einen oder der mehreren Leistungsverbinder verbunden ist, um dem Bauteil hydraulische Leistung zuzuführen.

3. Vorrichtung (1) nach einem der vorhergehenden Ansprüche, wobei die Betätigungseinheit (23, 25) einen ersten Aktuator (23), der mit der Hülse (22) verbunden ist, umfasst, wobei der erste Aktuator (23) ein Transferelement (232) einschließt, das ausgelegt ist, um auf die Hülse (22) eine rotatorische Verschiebung als Reaktion auf eine Drehung des ersten Aktuators (23) zu übertragen.

4. Vorrichtung (1) nach einem der vorhergehenden Ansprüche, wobei die Zentriermaschine (2) eine Spindel (24) umfasst, die konzentrisch zur Hülse (22) angeordnet ist und sich um die Rotationsachse (A) relativ zum Rahmen (21) dreht, wobei die Hülse (22) ausgelegt ist, um sich relativ zur Spindel (24) entlang der Längsrichtung (L) zu verschieben.

5. Vorrichtung (1) nach Anspruch 4, wobei die Spindel (24) einen Greifkranz (24') umfasst, der ein oder mehrere Greifenden (241C) einschließt, ausgelegt, um ein weiteres Bauteil zu greifen, um mit dem Bauteil (PZ) zusammengebaut zu werden.

6. Vorrichtung (1) nach Anspruch 5, wobei der Greifkranz (24') einen Umfangsleistungskreis umfasst, der mit der Betätigungseinheit (23, 25) verbunden ist, und einschließend einen oder mehrere Umfangsleistungsverbinder (242A, 242B), die an dem einen oder den mehreren Greifenden (241C) positioniert sind, wobei der eine oder die mehreren Umfangsleistungsverbinder (242A, 242B) ausgelegt sind, um sich mit einem entsprechenden Verbinder des weiteren Bauteils zu verbinden.

7. Vorrichtung (1) nach Anspruch 6, wobei ein oder mehrere Umfangsleistungsverbinder einen oder mehrere elektrische(n) Leistungsverbinder (242A) und einen oder mehrere hydraulische(n) Umfangsleistungsverbinder (242B) umfassen.

8. Vorrichtung (1) nach Anspruch 6 oder 7, wobei ein jedes Greifende (241) mindestens einen Umfangsleistungsverbinder (242A, 242B) des einen oder der mehreren Umfangsleistungsverbinder umfasst.

9. Vorrichtung (1) nach einem der vorhergehenden Ansprüche, umfassend eine zusätzliche Zentriermaschine (3), die einen entsprechenden zusätzlichen Rahmen, eine entsprechende zusätzliche Hülse und eine entsprechende zusätzliche Betätigungseinheit umfasst, wobei sich die zusätzliche Hülse um die Rotationsachse dreht und wobei das zweite Ende der Hülse und das zweite Ende der zusätzlichen Hülse einander zugewandt sind, und wobei der Rahmen und der zusätzliche Rahmen hinführend zueinander und wegführend voneinander entlang der Längsrichtung bewegbar sind.

10. Gebrauch der Vorrichtung (1) nach einem der vorhergehenden Ansprüche als Vorrichtung zum Inspizieren eines Bauteils und/oder zum Zusammenbauen eines axial symmetrischen Bauteils mit einem weiteren axial symmetrischen Bauteil.

11. Verfahren zum Halten eines Bauteils während der Durchführung von einem oder mehreren Vorgängen, wobei das Verfahren die folgenden Schritte umfasst:
- Bewegen eines Rahmens (21) entlang einer Längsrichtung (L) unter Nutzung einer Betätigungseinheit (23, 25);
- Greifen des Bauteils (PZ) unter Nutzung einer Hülse (22), die mit dem Rahmen (21) assoziiert und entlang der Längsachse (L) zwischen einem ersten Ende (22A) und einem zweiten Ende (22B) langgestreckt und dem Bauteil zugewandt ist, um das Greifen durchzuführen;
- Drehen der Hülse (22) um eine Rotationsachse (A) unter Nutzung der Betätigungseinheit (23, 25),
wobei das Verfahren einen Schritt zum Bewegen der Hülse (22) entlang der Längsrichtung (L) relativ zum Rahmen (21) umfasst, wobei das Verfahren durch einen Verbindungsschritt gekennzeichnet ist, bei dem ein oder mehrere zentrale Leistungsverbinder (221), die am zweiten Ende der Hülse (22B) positioniert sind, mit entsprechenden Verbindern des Bauteils verbunden sind, und einen Schritt zum Zuführen von Leistung, bei dem ein zentraler Leistungskreis, der mit der Betätigungseinheit und dem einen oder den mehreren zentralen Leistungsverbindern (221) verbunden ist, elektrische Leistung und/oder hydraulische Leistung an das Bauteil (PZ) sendet.

12. Verfahren nach Anspruch 11, wobei die Schritte zum Drehen der Hülse (22) und zum Bewegen der Hülse (22) simultan durchgeführt werden und eine rotatorische Verschiebung der Hülse (22) relativ zum Rahmen (21) definieren.

13. Verfahren nach Anspruch 11 oder 12, umfassend einen zusätzlichen Schritt zum Greifen, bei dem ein oder mehrere Greifenden (241) einer Spindel (24) konzentrisch zur Hülse (22) ein weiteres Bauteil halten, und umfassend einen Zusammenbauschritt, bei dem sich die Spindel (24) relativ zur Hülse (22) dreht, um das weitere Bauteil mit dem auf der Hülse (22) gegriffenen Bauteil zusammenzubauen.

## Revendications

1. Dispositif (1) de maintien d'une pièce pendant l'exécution d'une ou plusieurs opérations, comprenant une machine de centrage (2), incluant :
- un cadre (21), mobile le long d'une direction longitudinale (L) ;
- un manchon (22), associé au cadre (21) et allongé le long de la direction longitudinale (L) entre une première extrémité (22A) et une seconde extrémité (22B), la seconde extrémité (22B) faisant face à l'extérieur du cadre (21) dans une direction de maintien et étant configurée pour venir en contact avec la pièce (PZ),
le manchon (22) étant rotatif par rapport au cadre (21) autour d'un axe de rotation (A) ;
- une unité d'actionnement (23, 25), connectée au manchon (22) pour le mettre en rotation autour de l'axe de rotation (A) et au cadre (21) pour le déplacer le long de la direction longitudinale (L),
dans lequel le manchon (22) se déplace en translation le long de la direction longitudinale (L) par rapport au cadre (21) afin de faire varier une distance de la seconde extrémité (22B) du manchon (22) par rapport au cadre (21),
**caractérisé en ce que** le manchon (22) comprend un circuit d'alimentation central, connecté à l'unité d'actionnement (23, 25) et incluant un ou plusieurs connecteurs d'alimentation centraux (221), positionnés au niveau de la seconde extrémité (22B) du manchon (2), lesdits un ou plusieurs connecteurs d'alimentation centraux (221) étant configurés pour se connecter à un connecteur correspondant de la pièce (PZ).

2. Dispositif (1) selon la revendication 1, dans lequel le circuit d'alimentation central comprend une ligne électrique, connectée à un connecteur électrique central correspondant (221B) desdits un ou plusieurs connecteurs d'alimentation centraux, pour fournir de l'énergie électrique à la pièce, et une ligne hydraulique, connectée à un connecteur hydraulique central correspondant (221A) desdits un ou plusieurs connecteurs d'alimentation centraux, pour fournir de l'énergie hydraulique à la pièce.

3. Dispositif (1) selon l'une quelconque des revendications précédentes, dans lequel l'unité d'actionnement (23, 25) comprend un premier actionneur (23), connecté au manchon (22), ledit premier actionneur (23) incluant un élément de transfert (232), configuré pour transmettre au manchon (22) une roto-translation, en réponse à une rotation du premier actionneur (23).

4. Dispositif (1) selon l'une quelconque des revendications précédentes, dans lequel la machine de centrage (2) comprend une broche (24), concentrique par rapport au manchon (22) et tournant autour de l'axe de rotation (A) par rapport au cadre (21), dans lequel le manchon (22) est configuré pour se déplacer en translation par rapport à la broche (24) le long de la direction longitudinale (L).

5. Dispositif (1) selon la revendication 4, dans lequel la broche (24) comprend une couronne de préhension (24'), incluant une ou plusieurs extrémités de préhension (241C), configurées pour saisir une autre pièce, à assembler sur la pièce (PZ).

6. Dispositif (1) selon la revendication 5, dans lequel la couronne de préhension (24') comprend un circuit d'alimentation circonférentiel, connecté à l'unité d'actionnement (23, 25) et incluant un ou plusieurs connecteurs d'alimentation circonférentiels (242A, 242B), positionnés au niveau desdites une ou plusieurs extrémités de préhension (241C), lesdits un ou plusieurs connecteurs d'alimentation circonférentiels (242A, 242B) étant configurés pour se connecter à un connecteur correspondant de l'autre pièce.

7. Dispositif (1) selon la revendication 6, dans lequel lesdits un ou plusieurs connecteurs d'alimentation circonférentiels comprennent un ou plusieurs connecteurs d'alimentation électrique circonférentiels (242A) et un ou plusieurs connecteurs d'alimentation hydraulique circonférentiels (242B).

8. Dispositif (1) selon la revendication 6 ou 7, dans lequel chaque extrémité de préhension (241) comprend au moins un connecteur d'alimentation circonférentiel (242A, 242B) desdits un ou plusieurs connecteurs d'alimentation circonférentiels.

9. Dispositif (1) selon l'une quelconque des revendications précédentes, comprenant une machine de centrage supplémentaire (3), comprenant un cadre supplémentaire correspondant, un manchon supplémentaire correspondant et une unité d'actionnement supplémentaire correspondante, dans lequel le manchon supplémentaire tourne autour de l'axe de rotation et dans lequel la seconde extrémité du manchon et la seconde extrémité du manchon supplémentaire se font face, et dans lequel le cadre et le cadre supplémentaire peuvent se rapprocher et s'éloigner l'un de l'autre le long de la direction longitudinale.

10. Utilisation du dispositif (1) selon l'une quelconque des revendications précédentes en tant que dispositif pour inspecter une pièce et/ou pour assembler une pièce axialement symétrique à une autre pièce axialement symétrique.

11. Méthode de maintien d'une pièce pendant l'exécution d'une ou plusieurs opérations, la méthode comprenant les étapes suivantes :
- déplacer un cadre (21) le long d'une direction longitudinale (L) à l'aide d'une unité d'actionnement (23, 25) ;
- saisir la pièce (PZ) à l'aide d'un manchon (22), qui est associé au cadre (21) et s'étend le long de l'axe longitudinal (L) entre une première extrémité (22A) et une seconde extrémité (22B), tournée vers la pièce pour exécuter la préhension ;
- faire tourner le manchon (22) autour d'un axe de rotation (A) à l'aide de l'unité d'actionnement (23, 25),
dans laquelle la méthode comprend une étape de déplacer le manchon (22) le long de la direction longitudinale (L) par rapport au cadre (21), la méthode étant **caractérisée par** une étape de connecter, dans laquelle un ou plusieurs connecteurs d'alimentation centraux (221), positionnés au niveau de la seconde extrémité du manchon (22B), sont connectés aux connecteurs correspondants de la pièce et une étape de fournir de l'énergie, dans laquelle un circuit d'alimentation central, connecté à l'unité d'actionnement et auxdits un ou plusieurs connecteurs d'alimentation centraux (221), envoie de l'énergie électrique et/ou de l'énergie hydraulique à la pièce (PZ).

12. Méthode selon la revendication 11, dans laquelle les étapes de tourner le manchon (22) et de déplacer le manchon (22) sont effectuées simultanément, définissant une roto-translation du manchon (22) par rapport au cadre (21) .

13. Méthode selon la revendication 11 ou 12, comprenant une étape de saisir supplémentaire, dans laquelle une ou plusieurs extrémités de préhension (241) d'une broche (24) concentrique par rapport au manchon (22) maintiennent une autre pièce et comprenant une étape d'assembler, dans laquelle la broche (24) tourne par rapport au manchon (22) pour assembler l'autre pièce à la pièce saisie sur le manchon (22).
